Europäisches Patentamt

European Patent Office

Office européen des brevets

(11) Veröffentlichungsnummer: **0 087 730**

**A1**

(12) # EUROPÄISCHE PATENTANMELDUNG

(21) Anmeldenummer: 83101697.7

(22) Anmeldetag: 22.02.83

(51) Int. Cl.³: **B 41 F 13/18**
**F 16 C 13/00**

(30) Priorität: 03.03.82 IT 6723982

(43) Veröffentlichungstag der Anmeldung:
07.09.83 Patentblatt 83/36

(84) Benannte Vertragsstaaten:
CH DE FR GB LI SE

(71) Anmelder: Componenti Grafici S.r.l.
Corso Re Umberto 8
I-10128 Torino(IT)

(72) Erfinder: Molinatto, Bruno
Via Ivrea 128
Montalto Dora (Torino)(IT)

(74) Vertreter: Mayer, Hans Benno
Via dell'Orso 7/A
I-20121 Milano(IT)

(54) **Druckzylinder mit in ihrer Form veränderbaren Längsachse.**

(57) Druckzylinder (1) mit in ihrer Form veraenderbaren Laengsachse, wobei ein aeusserer Mantel (2) mittig von einer inneren Welle (3) getragen wird, die im wesentlichen koaxial zum Mantel angeordnet ist, und mit dem aeusseren Mantel (2) ueber Kugellager (5) in Wirkverbindung steht und an seinen Enden zwei zylinderfoermige aeussere Buchsen (8) aufweist, die unter Zwischenschaltung weiterer Kugellager (10) den aeusseren Mantel aufnehmen; jede zylinderfoermige Buchse (8) ist derartig angeordnet, dass sie in ihrer Winkelstellung auf einem exzentrischen Zapfen (6) einstellbar ist, wobei dieser exzentrische Zapfen fest gegenueber dem zugeordneten Ende der inneren Welle (3) und exzentrisch gegenueber dieser Welle angeordnet ist.

EP 0 087 730 A1

- 1 -

**0087730**

Firma Componenti Grafici S.r.l.

10128 - Torino, Corso Re Umberto 8


Druckzylinder mit in ihrer Form veraenderbaren Laengsachse


Die vorstehende Erfindung betrifft einen Druckzylinder mit in ihrer Form veraenderbaren Achse, besonders fuer eine Tiefdruckmaschine. Die vorstehende Erfindung betrifft besonders einen Druckzylinder, der in Anlage mit einer beweglichen Auflageflaeche, meistens einer zylindrischen Oberflaeche Verwendung findet, um somit auf diese Oberflaeche einen bestimmten Druck zu uebertragen, der im wesentlichen gleichfoermig entlang einer Beruehrungslinie uebertragen wird.

Die vorstehende Erfindung findet in vorteilhafter Weise Anwendung bei Druckzylindern fuer Tiefdruckmaschinen, die eine verhaeltnismaessig grosse Arbeitslaenge aufweisen, und bei denen sowohl die Durchbiegung aufgrund des Eigengewichtes, als auch die Durchbiegung der genannten Auflageflaechen zu unregelmaessigen Beruehrungspunkten zwischen diesen Flaechen und den zugeordneten Druckzylindern fuehren. In den geschilderten Faellen ist der Anpressdruck nicht gleichmaessig entlang der genannten Beruehrungslinie verteilt, sondern aendert sich von Stelle zu Stelle dieser Beruehrungslinie. Diese Aenderungen erfolgen normalerweise in Abhaengigkeit von komplexen Gesetzmaessigkeiten, wobei ein Minimum in Uebereinstimmung mit der Mitte des Druckzylinders festzustellen ist. Sofern es erwuenscht ist, dass dieses Minimum ueber einem vorbestimmten Wert zu liegen kommt, ist es erforderlich, dem Zylinder einen entsprechenden Druck aufzupraegen, der einem mittleren Druckwert entlang der Mantellinie entspricht und der um ein Vielfaches ueber dem genannten Minimumwert ist.

Aufgabe der vorstehenden Erfindung ist es, einen Druckzylinder zu schaffen, dessen Mantellinie eine derartige Verformung erteilt werden kann, die gleich der Verformung der zugeordneten Auflageflaeche ist, wobei diese Verformung unabhaengig von den Belastungen erfolgt, die zwischen der genannten Oberflaeche und dem zugehoerigen Zylinder waehrend ihrer Beruehrung auftreten.

Die erfindungsgemaesse Aufgabe wird durch einen Druckzylinder mit in ihrer Form veraenderbaren Achse dadurch geloest, dass ein zylinderfoermiger, aeusserer Mantel auf einer koaxial zu diesem Mantel angeordneten inneren Welle angeordnet ist, wobei die Welle drehbar mit einem Mittelteil der Innenflaeche des Mantels wirkverbunden ist, und dass zwei zylindrische Endstuecke, die von der Welle aufgenommen werden, vorgesehen sind, von denen jedes drehbar mit einem Ende der Innenflaeche des Mantels verbunden ist, dass jedes zylinderfoermige Endstueck in seiner Winkelstellung einstellbar auf einem zugeordneten Exzenterschaft angeordnet ist, der axial und in exzentrischer Lage von dem entsprechenden Ende der Innenwelle absteht.

Weitere Merkmale und Vorteile der vorstehenden Erfindung koennen der nun folgenden Beschreibung, unter Bezugnahme auf die beigefuegte Zeichnung, entnommen werden.

In der beigefuegten Zeichnung ist schematisch und im Laengsschnitt eine Ausfuehrungsform des erfindungsgemaessen Druckzylinders dargestellt.

In der beigefuegten Zeichnung ist der dargestellte Druckzylinder gesamthaft mit 1 bezeichnet. Der Druckzylinder 1 besteht aus einem zylindrischen aeusseren Mantel 2, in dessem Inneren mit Radialpsiel eine Innenwelle 3, die zylindrische Form aufweist, angeordnet ist. Die Achse der Welle 3 erstreckt sich im wesentlichen koaxial zur Achse des Mantels 2.

Ein mittleres Stueck der Welle 3 ist drehbar mit einem mittleren Teilstueck einer zylindrischen Innenflaeche 4 des Mantels 2, ueber zwei Kugelgellager 5, wirkverbunden. Der innere Ring eines jeden Kugellagers ist kraftschluessig auf die Welle 3 aufgeBracht und der aeussere Ring eines jeden Kugellagers ist kraftschluessig mit der Innenflaeche 4 verbunden.

Von den entgegengesetzten Enden der Welle 3 stehen axial Zapfen 6 ab, die zueinander koaxial sind. Die Achsen dieser Zapfen weisen eine Exzentrizitaet (e) gegenueber der Achse der Welle 3 auf. Jeder Zapfen 6 erstreckt sich drehbar durch eine in Laengsrichtung verlaufende entsprechende Durchgangsbohrung 7, die in exzentrischer Lage in einen entsprechenden, zylinderfoermigen Koerper 8 eingearbeitet ist, der ebenfalls eine Exzentrizitaet (e) aufweist. Das Ende eines jeden zylinderfoermigen Koerpers 8 ragt aus dem Mantel 2, waehrend das andere Ende des Koerpers im Inneren des Mantels 2 angeordnet ist und einen Flansch 9 aufweist, der als Anschlagschulter fuer den inneren Ring eines Kugellagers 10 dient, dessen aeusserer Ring mit einem Endstueck der Flaeche 4 in Verbindung steht.

Auf einer Zwischenflaeche jedes Zapfens 6, die im Inneren der zugeordneten Bohrung 7 angeordnet ist, ist eine schrauben-foermige Verzahnung 11 vorgesehen, die mit einer Gewindespindel 12 kaemmt, die von aussen her betaetigbar ist und drehbar im Inneren einer Bohrung 13 gelagert ist, die sich quer durch den zylinderfoermigen Koerper 8 erstreckt und in die zugeordnete Bohrung 7 muendet.

Das freie Ende eines jeden Zapfens 6 tritt aus dem zugeordneten zylinderfoermigen Koerper 8 aus und wird von einer Lagervorrichtung (nicht dargestellt) fuer den Zylinders 1 aufgenommen.

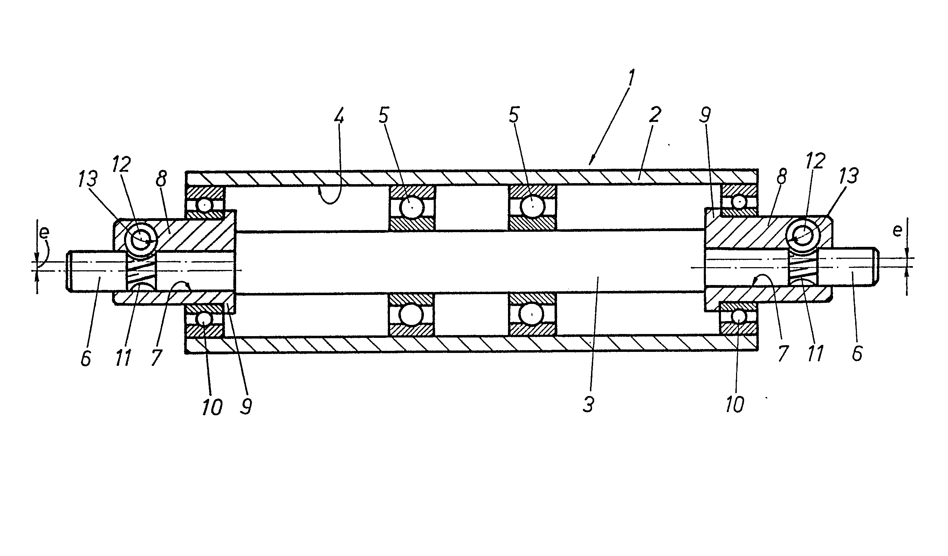

Die Arbeitsweise des erfindungsgemaessen Druckzylinders ist folgende: durch Einwirken auf die Gewindeschnecken 12, ist es moeglich, die Winkelposition der zylinderfoermigen Koerper 8 gegenueber den zugeordneten Zapfen 6 zu veraendern. Folglich ist es moeglich, den zylinderfoermigen Koeper 8 quer zur Welle 3, aus der in der Zeichnung dargestellten Stellung, in der die zylinderfoermigen Koerper 8 koaxial zur Welle angeordnet sind, in eine Stellung zu verdrehen, in der die zylinderfoermigen Koerper 8 gegenueber der Welle 3 eine Exzentrizitaet um den Betrag 2e einnehmen.

Daraus folgt, dass durch Uebertragen einer beliebigen Drehbewegung in der einen oder ader anderen Richtung der zylinderfoermigen Koerper 8, gegenueber den zugeordneten Zapfen 6, ueber einen beliebigen Winkel, der zwischen 0 und 180° liegt, eine Querverschiebung der Enden der Huelse 2 gegenueber dem Mittelstueck der Huelse, um einen Abstand zwischen 0 und 2e, durchfuehrbar ist, d.h., dem Mantel 2 kann auf einfachste und sichere Weise eine Durchbiegung mit einem Wert zwischen 0 und 2e, unabhaengig vom Anpresdruck, der zwischen dem Zylinder 1 und einer Auflageflaeche (nicht dargstellt) besteht, und die tangential entlang einer Mantellinie liegt, uebertragen werden.

Patentansprueche

1. Druckzylinder mit in ihrer Form veraenderlichen Achse, dadurch gekennzeichnet, dass ein zylinderfoermiger aeusserer Mantel (2) auf einer koaxial zu diesem Mantel angeordneten inneren Welle (3) angeordnet ist, wobei die Welle drehbar mit einem Mittelteil der Innenflaeche (4) des Mantels (2) wirkverbunden ist, und dass zwei zylindrische Endstuecke (8), die von der Welle (3) aufgenommen werden vorgesehen sind, von denen jedes drehbar mit einem Ende der Innenflaeche (4) des Mantels wirkverbunden ist, dass jedes zylinderfoermige Endstueck (8) in seiner Winkelstellung einstellbar auf einem zugeordneten Exzenterschaft (6) angeordnet ist, der axial und in exzentrischer Lage vom entsprechenden Ende der Innenwelle (3) absteht.

2. Zylinder, nach Patentanspruch 1, dadurch gekennzeichnet, dass die innere Welle (3) und die zylinderfoermigen Endstuecken (8) mit Radialspiel im Inneren des Mantels (2), gegenueber der zylindrischen inneren Flaeche (4) des Mantels angeordnet sind und mit dieser Huelse drehbar unter Verwendung von Kugellager (5, 10) wirkverbunden sind.

3. Zylinder, nach Patentanspruch 1 oder 2, dadurch gekennzeichnet, dass jeder der Zapfen (6) drehbar in einer Bohrung (7) aufgenommen ist, die in Axialrichtung durch den zugeordneten, zylinderfoermigen Koerper (8) gefuehrt ist und die gegenueber diesem Koerper eine Exzentrizitaet (e) aufweist, die der Exzentrizitaet (e) des zugeordneten Zapfens (6) gegenueber der inneren Welle (3) entspricht.

4. Zylinder, nach Patentanspruch 3, dadurch gekennzeichnet, dass Betaetigungsmittel (11, 12) zwischen jedem der zylinderfoermigen Koerper (8) und dem zugeordneten Zapfen (6), zur Veraenderung der Winkelstellung der Bauteile, vorgesehen sind.

Europäisches
Patentamt

**EUROPÄISCHER RECHERCHENBERICHT**

**0087730**
Nummer der Anmeldung

EP 83 10 1697

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | DE-B-1 292 956 (DORNBUSCH & CO.) * Insgesamt * | 1-4 | B 41 F 13/18 F 16 C 13/00 |
| Y | DE-B-1 264 378 (SUCKER) * Insgesamt * | 1-3 | |
| Y | DE-B-2 033 740 (ECK & SÖHNE) * Spalte 3, Zeilen 17-33; Spalte 4, Zeilen 5-31; Figur 1 * | 1,4 | |
| A | GB-A-2 060 821 (MAN-ROLAND) * Insgesamt * | 1-4 | |

RECHERCHIERTE SACHGEBIETE (Int. Cl. ³)

B 41 F
F 16 C

Der vorliegende Recherchenbericht wurde für alle Patentansprüche erstellt.

| Recherchenort DEN HAAG | Abschlußdatum der Recherche 02-06-1983 | Prüfer RECHLER W. |
|---|---|---|